# EUROPEAN PATENT APPLICATION

(11) **EP 4 823 080 A1**
(43) Date of publication of application: **14.10.2026**
(21) Application number: 24899704.1
(22) Date of filing: 28.11.2024
(51) Int. Cl.: H04M 1/72436

(54) **INTERACTION METHOD AND APPARATUS AND COMPUTER-READABLE STORAGE MEDIUM**

(30) Priority: 04.12.2023 CN 202311651049
(71) Applicant: Beijing Zitiao Network Technology Co., Ltd., Beijing 100190 (CN)
(72) Inventor: LI, Zhuoen, Beijing 100028 (CN)
(74) Representative: Grünecker Patent- und Rechtsanwälte PartG mbB
(86) International application number: PCT/CN2024/135108
(87) International publication number: WO 2025/119064

(57) **Abstract**

The present disclosure relates to an interaction method and apparatus and a computer-readable storage medium, and relates to the technical field of terminals. The interaction method includes : displaying, in response to triggering display of a first media interface, a message preview window in the first media interface, the message preview window comprising a preview of at least one unread message, and the first media interface being configured for displaying multimedia content; displaying a message entry control in the first media interface; and displaying a message page in response to a first operation on the message entry control.

## Description

### CROSS-REFERENCE TO RELATED APPLICATION(S)

The present application is based on and claims priority of China Application No. 202311651049.9, filed on December 4, 2023, the disclosure of which is hereby incorporated by reference in its entirety into the present application.

### TECHNICAL FIELD

The present disclosure relates to the field of terminal technologies, and in particular, to an interaction method, an apparatus, and a computer-readable storage medium.

### BACKGROUND

Many types of applications provide users with a message function for different users to send messages to each other for online communication.

### SUMMARY

The part of the summary is provided in order to introduce the concept in a brief form, and these concepts will be described in detail in the following part of the detailed description. The part of the summary is not intended to identify key features or essential features of the claimed technical solution, nor is it intended to limit the scope of the claimed technical solution required.

According to some embodiments of the present disclosure, an interaction method is provided, including: displaying a message preview window in the first media interface in response to triggering display of a first media interface, the message preview window including a preview of at least one unread message, and the first media interface being configured for displaying multimedia content; displaying a message entry control in the first media interface; and displaying a message page in response to a specified operation on the message entry control.

According to some other embodiments of the present disclosure, an interaction apparatus is provided, including: a first display module configured to display, in response to triggering display of a first media interface, a message preview window in the first media interface, the message preview window including a preview of at least one unread message, and the first media interface being configured for displaying multimedia content; a second display module configured to display a message entry control in the first media interface; and a third display module configured to display a message page, in response to a specified operation on the message entry control.

According to some embodiments of the present disclosure, an electronic device is provided, including: a memory; and a processor coupled to the memory, the processor being configured to, based on instructions stored in the memory, execute the interaction method of any one of the embodiments described in the present disclosure.

According to some embodiments of the present disclosure, a computer-readable storage medium is provided, having a computer program stored thereon, where when the program is executed by a processor, the interaction method of any one of the embodiments described in the present disclosure is executed.

According to some embodiments of the present disclosure, a computer program is provided, including: instructions that, when executed by a processor, cause the processor to execute the interaction method of any one of the embodiments described in the present disclosure.

Other features, aspects, and advantages of the present disclosure will become clear through the following detailed description of exemplary embodiments of the present disclosure with reference to the drawings.

### BRIEF DESCRIPTION OF THE DRAWINGS

Preferred embodiments of the present disclosure are described hereinafter with reference to the drawings. The drawings described herein are used to provide a further understanding of the present disclosure, and together with the following specific description, are incorporated in and form a part of this specification for explaining the present disclosure. It should be understood that the drawings in the following description relate only to some embodiments of the present disclosure, and do not constitute a limitation to the present disclosure. In the drawings:
Fig. 1 shows a schematic diagram of an application interface of some embodiments;
Fig. 2 shows a schematic flowchart of an interaction method according to some embodiments of the present disclosure;
Fig. 3A and Fig. 3B show schematic diagrams of a first media interface according to some embodiments of the present disclosure;
Fig. 4 shows a schematic diagram of a second media interface according to some embodiments of the present disclosure;
Fig. 5A and Fig. 5B show schematic diagrams of a first media interface according to some other embodiments of the present disclosure;
Fig. 6 shows a schematic diagram of a message page according to some embodiments of the present disclosure;
Fig. 7 shows a schematic structural diagram of an interaction apparatus according to some embodiments of the present disclosure;
Fig. 8 shows a schematic structural diagram of an electronic device according to some embodiments of the present disclosure;
Fig. 9 shows a schematic structural diagram of a computer system according to some embodiments of the present disclosure;

It should be understood that, for ease of description, the dimensions of various parts shown in the drawings are not necessarily drawn to scale. Throughout the drawings, the same or similar reference numerals are used to represent the same or similar components. Therefore, once an item is defined in one drawing, it may not be further discussed in subsequent drawings.

### DETAILED DESCRIPTION OF EMBODIMENTS

The technical solutions in the embodiments of the present disclosure are clearly and completely described hereinafter with reference to the drawings in the embodiments of the present disclosure. Apparently, the described embodiments are merely some rather than all of the embodiments of the present disclosure. The following description of the embodiments is merely illustrative and is not intended to limit the present disclosure and its applications or uses in any way. It should be understood that the present disclosure may be implemented in various forms and is not limited to the embodiments set forth herein.

It should be understood that various steps recited in the method implementations of the present disclosure may be executed in a different order and/or in parallel. Additionally, the method implementations may include additional steps and/or omit the execution of some of the illustrated steps. The scope of the present disclosure is not limited in this respect. Unless otherwise specified, the relative arrangements, numerical expressions and values of components and steps set forth in these embodiments are interpreted as merely illustrative and do not limit the scope of the present disclosure.

The term "include/comprise" and its variant used in the present disclosure mean an open term that at least includes/follows an element/feature but does not exclude other elements/features, that is, "include/comprise but not limited to". Additionally, the term "include/comprise" and its variant used in the present disclosure mean an open term that at least includes/follows an element/feature but does not exclude other elements/features, that is, "include/comprise but not limited to". Therefore, include/comprise are synonyms. The term "based on" means "at least partially based on".

Reference to "an embodiment", "some embodiments" or "embodiments" throughout the specification means that a particular feature, structure, or characteristic described in conjunction with the embodiments is included in at least one embodiment of the present disclosure. For example, the term "an embodiment" means "at least one embodiment"; the term "another embodiment" means "at least one another embodiment"; the term "some embodiments" means "at least some embodiments". Additionally, appearances of the phrase "in an embodiment", "in some embodiments" or "in the embodiments" in various places throughout the specification are not necessarily referring to the same embodiment, but may also refer to the same embodiment.

It should be noted that concepts such as "first" and "second" mentioned in the present disclosure are merely used to distinguish between different apparatuses, modules, or units and are not used to limit the sequence or interdependence of the functions performed by these apparatuses, modules, or units. Unless otherwise specified, concepts such as "first" and "second" are not intended to imply that the objects so described must be in a given order in terms of time, space, ranking, or in any other way.

It should be noted that modifications of "a" and "a plurality of" mentioned in the present disclosure are illustrative rather than restrictive, and those skilled in the art should understand that they should be understood as "one or more" unless otherwise clearly indicated in the context.

The names of messages or information exchanged between a plurality of apparatuses in the implementations of the present disclosure are merely for illustrative purposes and are not intended to limit the scope of these messages or information.

The embodiments of the present disclosure are described in detail hereinafter with reference to the drawings, but the present disclosure is not limited to these specific embodiments. The following specific embodiments may be combined with each other, and the same or similar concepts or processes may not be repeated in some embodiments. Additionally, in one or more embodiments, a particular feature, structure, or characteristic may be combined in any suitable manner that will be clear to those of ordinary skill in the art from the present disclosure.

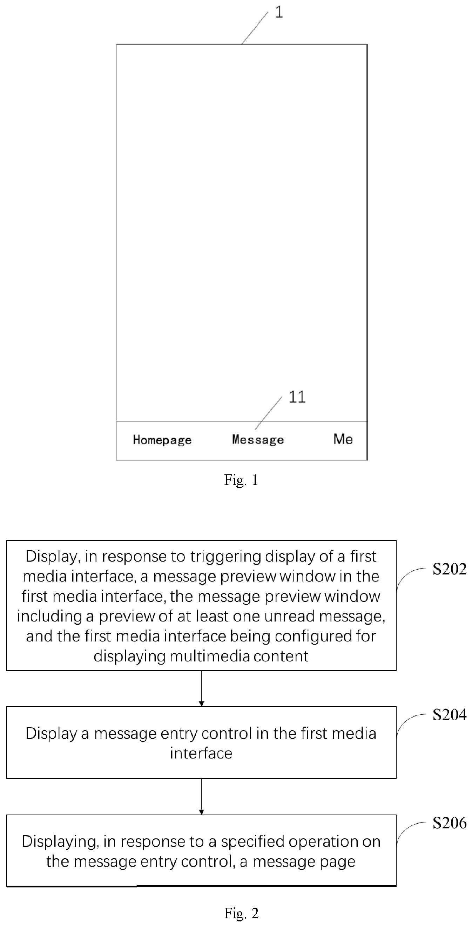

Some applications trigger display of a message page through a message entry. Fig. 1 shows a schematic diagram of an application interface of some embodiments. As shown in Fig. 1, in an interface 1, when a user clicks on a message entry control 11, a message page (not shown) may be displayed.

To enable the user to conveniently use a message function, the message entry may be set in a position that is easily accessible by the user. For example, some applications set the message entry at the bottom of a page. Thus, when the user operates a mobile terminal (such as a mobile phone) including a touch screen with one hand, the user may more conveniently reach a control at the bottom of the application in the mobile terminal, such as a message control.

Multimedia applications are mainly used for users to browse multimedia content, such as long videos, short videos, and picture-text content, etc. A long video refers to a video whose length is greater than a threshold; a short video refers to a video whose length is shorter than the threshold; and picture-text content refers to content that includes one or more images, and some content may also include text descriptions. The multimedia application may also be provided with a message function to facilitate communication between different users. For example, users with a friend relationship may share multimedia content or chat with each other through the message function; a viewer of the multimedia content may send a message to a creator to express appreciation or doubts about the multimedia content published by the creator, or to communicate with the creator; and a system side of the application may also send notifications to users through the message function. Certainly, the application scenarios of the message function are not limited to the above, and details are not described herein again.

As the functions of multimedia applications increase, the number of controls that need to be arranged in the application interface also increases. To improve the convenience of user operation, it may be considered to preferentially arrange important function controls in an area that is easily accessible by the user, for example, at the bottom of the application interface. In this case, a control that is not used most frequently in the multimedia application, such as a message entry control, needs to be moved.

The message function is not a main function of the multimedia application, but it may still help the user use the application. Since the message entry control may be set in a position where the user's operation efficiency is low, other ways may be provided to trigger the message function in order to compensate for the user's inconvenience in operation. An embodiment of the interaction method of the present disclosure is described hereinafter with reference to Fig. 2.

Fig. 2 shows a schematic flowchart of an interaction method according to some embodiments of the present disclosure. As shown in Fig. 2, the interaction method of this embodiment includes steps S202 to S206.

In step S202, a message preview window is displayed in the first media interface in response to triggering display of a first media interface, the message preview window including a preview of at least one unread message, and the first media interface being configured for displaying multimedia content.

For example, the display of the first media interface is triggered by switching from another interface other than the first media interface to the first media interface; or when the first media interface is a home page of the application, the display of the first media interface is triggered by opening the application.

The message preview window includes, for example, one or more message preview entries, and each message preview entry corresponds to one user. In addition to the preview of unread messages, the message preview window may also include a preview of read messages.

In some embodiments, the message preview window includes a specified number of preview entries, and in a case where the number of preview entries corresponding to unread messages is less than the specified number, the message preview window further includes a preview entry corresponding to a read message. For example, the specified number is 3, but only messages sent from two users to the application user have not been read by the application user. In this case, message preview entries corresponding to these two users may be displayed, and a preview entry corresponding to another user may be additionally displayed. If the number of users with unread messages is greater than the specified number, only the specified number of preview entries may be displayed. Therefore, the size of the message preview window may be fixed.

The message preview window may be a window floating on an upper layer of the first media interface, or a window arranged side by side with the multimedia content in the first media interface. In some embodiments, a top layer of the message preview window is arranged above the multimedia content for easy viewing by the user.

In some embodiments, in a case where the user performs a close operation on the message preview window, the message preview window may be closed and the message page is not displayed, the close operation is, for example, clicking on a close control on the message preview window, or folding up the message preview window through a slide operation, which will not be repeated here; or in a case where the user does not perform any operation on the message preview window within a specified time period, the message preview window is automatically closed and the message page is not displayed.

In some embodiments, the message preview window may be displayed while the display of the first media interface is triggered. Therefore, when the first media interface is displayed, the user does not need to perform an additional operation to trigger the display of the message preview window.

In some embodiments, in response to switching from another interface to the first media interface, in a case where there is currently no unread message, the message preview window is not displayed in the first media interface. Therefore, in the case where there is an unread message, the user may be reminded through the message preview window; and in the case where there is no unread message, the impact on the user's viewing of the multimedia content may be reduced.

In step S204, the message entry control is displayed in the first media interface.

In some embodiments, the message entry control is located in an upper half of the first media interface. Therefore, a lower half of the first media interface that is more accessible to the user may be used to deploy other controls. In some embodiments, the message entry control is located in a left half of the upper half of the first media interface, so that a right half that is more accessible to most users may also be used to deploy other controls.

In step S206, the message page is displayed in response to a specified operation on the message entry control. The specified operation is, for example, a click, a long press, or other types of operations, which will not be repeated here.

According to the above embodiments, the message function may be extended and supplemented by using the message preview window. Therefore, even if the message entry control is deployed in a position that is not easily accessible, the use efficiency of the message function is not affected. As a result, the operation convenience of the media interface is improved as a whole, and the operation efficiency of each control in the media interface is improved.

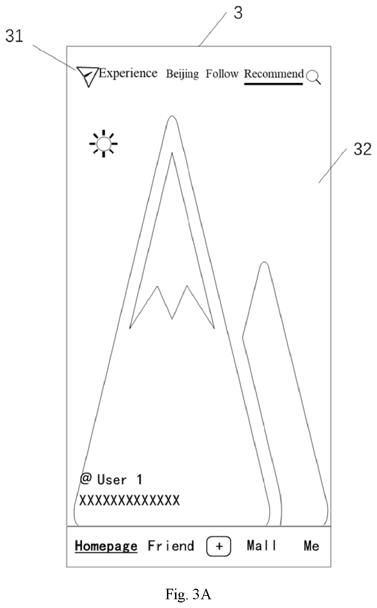

Fig. 3A shows a schematic diagram of a first media interface according to some embodiments of the present disclosure, and this embodiment presents a case where there is currently no unread message or a message preview window is closed by a user. As shown in Fig. 3A, in the first media interface 3 of this embodiment, multimedia content 32 is displayed. A message entry control 31 is arranged in an upper half of the first media interface 3. For example, the message entry control 31 is arranged in an upper left corner of the first media interface 3. For example, the message entry control may be a control closest to the upper left corner among the controls of the first media interface.

The above deployment manner of the message entry control is merely exemplary and does not limit the specific implementation of the present disclosure. For example, the message entry control may be arranged in an area where the user's operation efficiency is relatively low, such as a blind area of one-handed operation or an area beyond the reach of one hand, and these areas may be determined by pre-statistics of one-handed operation reach areas of a plurality of users. Therefore, a control that is more relevant to the multimedia content may be deployed in a non-blind area of one-handed operation or an area within the reach of one hand.

Regardless of whether the message preview window is displayed, some embodiments of the present disclosure further provide a method for triggering a message function. In some embodiments, the message page is displayed in response to a slide operation in an edge area corresponding to the message entry control in the first media interface. The edge area of the first media interface is an area covering an edge of the first media interface. A direction of the slide operation may point to a center position of the first media interface or be perpendicular to the edge corresponding to the edge area. For example, if the edge area is a left edge area of the first media interface, the direction of the slide operation is right; and if the edge area is a right edge area of the first media interface, the direction of the slide operation is left. Then, when the user ends the slide operation, the display of the message page may be triggered.

The edge area corresponding to the message entry may be an edge area close to the message entry control. In some embodiments, the edge area corresponding to the message entry control is an edge area closer to the message entry control in two side edge areas of the first media interface. For example, if the message entry is located in a left half of the first media interface, in response to the slide operation in the left edge area of the first media interface, the message page is displayed; and if the message entry is located in a right half of the first media interface, in response to the slide operation in the right edge area of the first media interface, the message page is displayed.

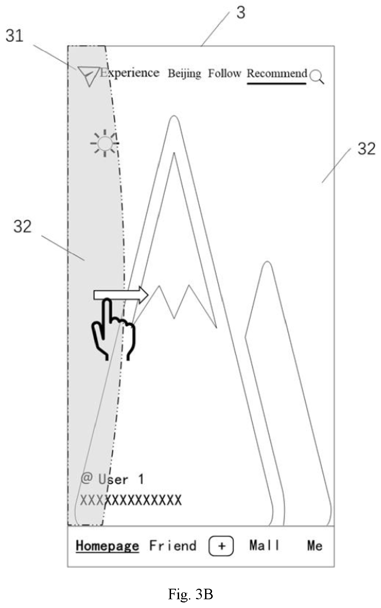

As shown in Fig. 3B, in the first media interface 3, when the user swipes right in the left edge area, the display of the message page may be triggered. As needed, during the user's sliding, a floating layer 32 may be displayed in a semi-transparent manner, and a range of the floating layer 32 is gradually expanded with the movement of the user until the range reaches a preset range. Then, when the user stops sliding, that is, lifts the finger, the message page is displayed.

The message entry control may be a control that is universal in a plurality of interfaces. In some embodiments, the message entry control is displayed in a second media interface for displaying multimedia content, and a position of the message entry control in the second media interface is the same as a position of the message entry control in the first media interface. During a specific implementation, the message entry controls in the first media interface and the second media interface may be the same control instance or different control instances. In the case of different control instances, the message entry controls in the first media interface and the second media interface may be controls with the same style, the same position, and the same function.

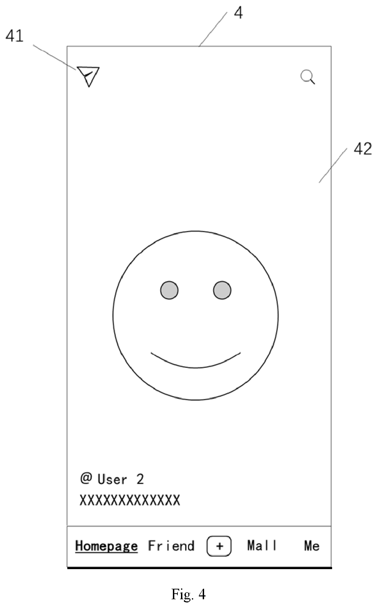

For example, the first media interface shown in FIGS. 3A and 3B may be a display interface of multimedia content corresponding to a "home page", which is used to push multimedia content to the user based on a specified recommendation policy. Fig. 4 shows a schematic diagram of a second media interface according to some embodiments of the present disclosure. As shown in Fig. 4, the second media interface of this embodiment may be a display interface of multimedia content corresponding to "friends", which is used to push videos posted by friends to the user. In the second media interface 4, multimedia content 42 is displayed. In the upper left corner of the interface, a message entry control 41 that is the same as the message entry control 31 of the first media interface 3 is displayed, and the positions of the message entry control 31 and the message entry control 41 are the same. Therefore, from the user's perspective, the same message entry control is presented in a plurality of different media interfaces. Therefore, the consistency of the user's operation in interfaces with similar functions may be ensured.

The second media interface may also include a message preview window, and for the specific implementation, reference may be made to the message preview window in the first media interface, which will not be repeated here.

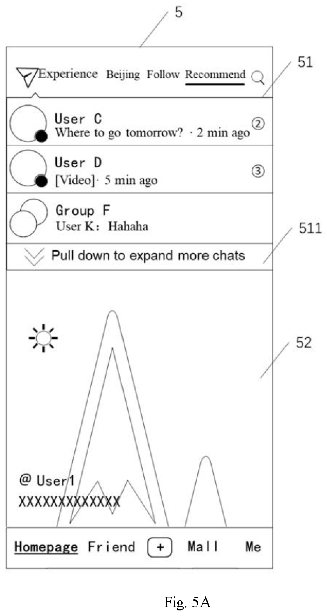

Fig. 5A shows a schematic diagram of a first media interface according to some other embodiments of the present disclosure. As shown in Fig. 5A, the first media interface 5 of this embodiment includes a message preview window 51 and multimedia content 52. The message preview window 51 includes three message preview entries, which are message preview entries of user C, user D, and group F, respectively, where 2 messages from user C and 3 messages from user D are unread, which may be indicated by unread identifications. In addition, messages from other users have been read. The messages of group F have been read, so there is no unread identification corresponding to group F.

In some embodiments, the message page is displayed in response to a specified operation on the message preview window,. The message page is the same page as the message page triggered by the message entry control and by sliding in the edge area. Therefore, the message preview window may also trigger the display of the message page. The specified operation is, for example, a pull-down operation on an edge of the message preview window or a click operation on the message preview window. As needed, other operations may be used, which will not be repeated here. For example, the bottom edge of the message preview window 51 includes a pull-down identification control 511, and the user may touch the pull-down identification control 511 and perform a slide-down operation to trigger the display of the message page.

By displaying the message preview window when switching to the first media interface, it is convenient for the user to view the current unread message and trigger the message function. In addition, by triggering the display of the message preview window when the user switches the interface, it may be avoided that the message preview window is displayed for a long time and the user is affected from browsing the multimedia content. Therefore, the operation efficiency and use experience of the user are improved.

Fig. 5A also exemplarily shows a positional relationship between the message preview window 51 and the multimedia content 52. In this embodiment, the message preview window 51 is located above the multimedia content 52, and the multimedia content 52 is partially displayed. For example, the complete display effect of the multimedia content 52 may be as shown in the multimedia content 32 in Fig. 3A, that is, the figure includes two complete mountains and the sun. In the first media interface 5 shown in Fig. 5A, due to the display of the message preview window 51, although the message window 51 does not cover the multimedia content 52, the multimedia content 52 is partially pushed out of the interface, so that the mountains in the multimedia content are only partially displayed.

In some embodiments, the smooth transition between the message preview window and the message page may be achieved by means of animation effects. For example, an animation of expanding the message preview window is displayed in response to a pull-down operation on the edge of the message preview window; and the message page is displayed in response to the end of the animation. Therefore, visually, the message preview window is expanded to form the message page. In a specific implementation, after displaying the animation for transition, the message page is then switched to.

An exemplary implementation of the animation is as follows. A background area of the message preview window is extended in a direction toward the multimedia content in the first media interface to present the expansion effect of the message preview window. Alternatively, in response to the slide-down operation, a semi-transparent mask layer may be added to the upper layer of the message preview window, and the original size of the mask layer is the same as that of the message preview window. As the slide-down operation proceeds, the transparency of the mask layer gradually decreases and the height gradually increases until the mask layer covers the entire first media interface, and then the display of the message page is triggered.

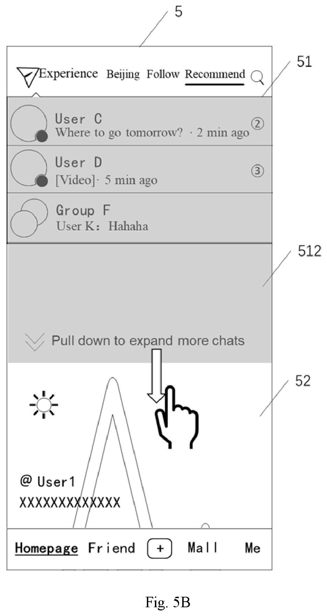

As shown in Fig. 5B, a semi-transparent floating layer 512 is displayed in response to the user's slide-down operation on the edge of the message preview window, and as the user's slide-down operation proceeds, the transparency of the floating layer 512 gradually decreases and the floating layer 512 gradually extends toward the bottom of the first media interface (resulting in a larger size). Therefore, visually, the message preview window is expanded.

In some embodiments, the display area of the message preview window is gradually expanded while the media content is gradually moved out of the first media interface in response to the pull-down operation on the edge of the message preview window; and in response to the media content being completely moved out of the first media interface, the message page is displayed. For example, in Fig. 5B, as the message preview window 51 expands, the multimedia content 52 also gradually moves down until it is completely "squeezed out" of the first media interface by the message preview window.

Through the above embodiments, the smooth transition from the message preview window to the message page may be achieved, and the fluency of the user operation is improved.

The above embodiments provide at least three triggering ways of the message page, which may provide a plurality of ways to enter the message page while improving the utilization rate of the media interface, so as to compensate for the operation efficiency. Therefore, the operation convenience of the media interface is improved as a whole, and the operation efficiency of each control in the media interface is improved.

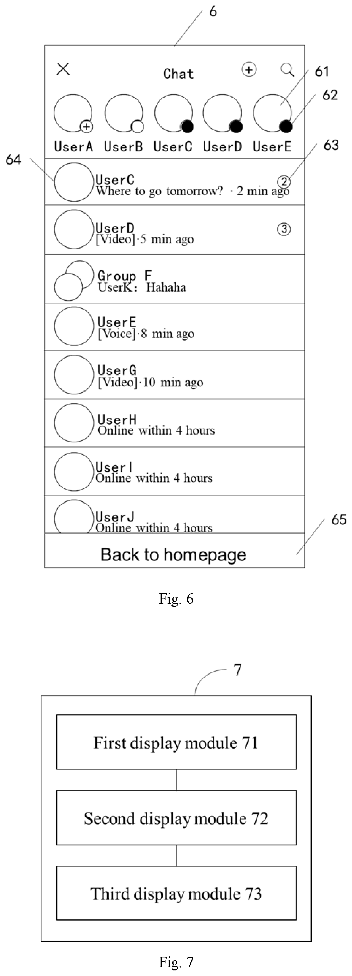

The message pages triggered by various message function triggering ways provided in the embodiments of the present disclosure are the same page. That is, the user may enter the message page in three different ways. Fig. 6 shows a schematic diagram of a message page according to some embodiments of the present disclosure. As shown in Fig. 6, the message page 6 includes a plurality of chat preview entries corresponding to users, such as chat preview entries corresponding to user C, user D, group F, user E, user G, user H, user I, and user J. Each preview entry may include an identification (such as a name and an avatar) of the user, and may also include information of a last message or a recent state of the user. For example, the chat preview entry corresponding to user C includes an avatar control 64 of the user, the user C's name "user C", and the last message "where to go tomorrow" sent 2 minutes ago. In addition, in the case where the message sent from a certain user has not been read by the user of the application, the chat preview entry may also include an unread identification. The unread identification may be a globally unified identification or may be personalized display according to the number of unread messages. For example, if there are 2 unread messages sent by user C, it is represented by the number 2 in the unread identification 63. After the chat preview entry is triggered, the chat interface may be displayed.

In some embodiments, the message page may further include a quick access panel for a plurality of users, which includes a plurality of user controls. As shown in Fig. 6, the message page 6 includes user controls corresponding to user A, user B, user C, user D, and user E, and the user controls may be represented by avatars of the users. For example, each user control also has a status indicator control. For example, a status indicator control 62 is arranged beside a user control 61 of user E. The status indicator control may indicate whether the user is a friend of the user of the application or whether the user is online. For example, if user A is not a friend of the application user, the status indicator control displays a plus sign, so that the user may add user A as a friend by triggering the user control of user A. For another example, if user B is in an offline state, and users C, D, and E are in an online state, the status indicator control of user B and the status indicator controls of users C, D, and E use different styles. By triggering the user control of the friend user, the user may display the chat interface corresponding to the friend user.

In some embodiments, the message page 6 may further include a return control 65 for the user to return to the first media interface or the second media interface.

An embodiment of the interaction apparatus of the present disclosure is described hereinafter with reference to Fig. 7.

Fig. 7 shows a schematic structural diagram of an interaction apparatus according to some embodiments of the present disclosure. As shown in Fig. 7, the interaction apparatus 7 of this embodiment includes: a first display module 71 configured to, display, in response to triggering display of a first media interface, a message preview window in the first media interface, the message preview window including a preview of at least one unread message, and the first media interface being configured for displaying multimedia content; a second display module 72 configured to display a message entry control in the first media interface; and a third display module 73 configured to display a message page, in response to a specified operation on the message entry control.

In some embodiments, the third display module 73 is further configured to display the message page in response to a specified operation on the message preview window.

In some embodiments, the specified operation is a pull-down operation, and the third display module 73 is further configured to: display the message page in response to a pull-down operation on an edge of the message preview window.

In some embodiments, the third display module 73 is further configured to: display an animation of expanding the message preview window in response to the pull-down operation on the edge of the message preview window; and display the message page in response to the end of the animation.

In some embodiments, the third display module 73 is further configured to: display the message preview window above the multimedia content in the first media interface, the media content being partially displayed.

In some embodiments, the third display module 73 is further configured to: gradually expand a display area of the message preview window while gradually moving the media content out of the first media interface in response to the pull-down operation on the edge of the message preview window; and display the message page in response to the media content being completely moved out of the first media interface.

In some embodiments, the message preview window includes a specified number of preview entries, and in response to the number of preview entries corresponding to unread messages being less than the specified number, the message preview window further includes a preview entry corresponding to a read message.

In some embodiments, the third display module 73 is further configured to display the message page, in response to a slide operation in an edge area corresponding to the message entry control in the first media interface.

In some embodiments, the edge area corresponding to the message entry control is an edge area closer to the message entry control in two side edge areas of the first media interface.

In some embodiments, the interaction apparatus 7 further includes a fourth display module, which is configured to display the message entry control in a second media interface for displaying multimedia content, a position of the message entry control in the second media interface being the same as a position of the message entry control in the first media interface.

It should be noted that the above units are only logical modules divided according to the specific functions they implement, and are not used to limit the specific implementation, for example, they may be implemented in software, hardware, or a combination of software and hardware. In an actual implementation, the above units may be implemented as independent physical entities, or may be implemented by a single entity (for example, a processor (CPU or DSP, etc.), an integrated circuit, etc.). In addition, the above units are indicated by dotted lines in the drawings to indicate that these units may not actually exist, and the operations/functions implemented by them may be implemented by the processing circuit itself.

In addition, although not shown, the device may also include a memory, which may store various information generated by the device and each unit included in the device in operation, programs and data for operation, data to be sent by the communication unit, etc. The memory may be a volatile memory and/or a non-volatile memory. For example, the memory may include, but is not limited to, a random access memory (RAM), a dynamic random access memory (DRAM), a static random access memory (SRAM), a read-only memory (ROM), and a flash memory. Certainly, the memory may also be located outside the device. Optionally, although not shown, the device may also include a communication unit, which may be used to communicate with other apparatuses. In an example, the communication unit may be implemented in a suitable manner known in the art, for example, including communication components such as an antenna array and/or a radio frequency link, various types of interfaces, communication units, etc. Details will not be described here again. In addition, the device may further include other components not shown, such as a radio frequency link, a baseband processing unit, a network interface, a processor, a controller, etc. Details will not be described here again.

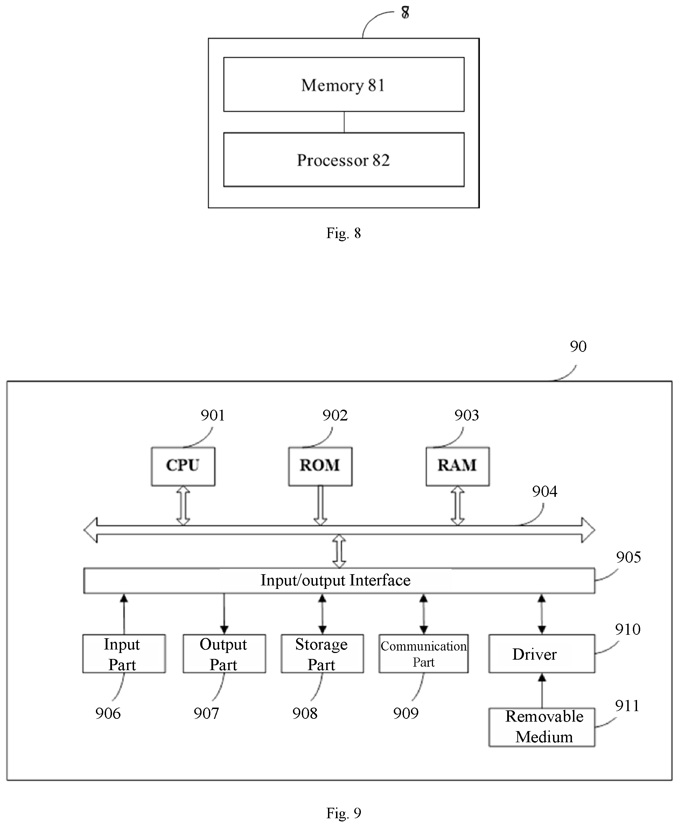

Some embodiments of the present disclosure further provide an electronic device. Fig. 8 shows a schematic structural diagram of an electronic device according to some embodiments of the present disclosure. For example, in some embodiments, the electronic device 8 may be various types of devices, for example, including but not limited to mobile terminals such as a mobile phone, a notebook computer, a digital broadcast receiver, a personal digital assistant (PDA), a tablet computer (PAD), a portable multimedia player (PMP), a vehicle-mounted terminal (for example, a vehicle-mounted navigation terminal), and fixed terminals such as a digital TV and a desktop computer. For example, the electronic device 8 may include a display panel for displaying data and/or execution results used in the solution of the present disclosure. For example, the display panel may be various shapes, such as a rectangular panel, an elliptical panel, or a polygonal panel. In addition, the display panel may be not only a flat panel, but also a curved panel or even a spherical panel.

As shown in Fig. 8, the electronic device 8 of this embodiment includes: a memory 81 and a processor 82 coupled to the memory 81. It should be noted that the components of the electronic device 8 shown in Fig. 8 are only exemplary and non-restrictive, and the electronic device 8 may also have other components according to actual application needs. The processor 82 may control other components in the electronic device 8 to perform desired functions.

In some embodiments, the memory 81 is used to store one or more computer-readable instructions. The processor 82 is used to, when running the computer-readable instructions, implement the method according to any one of the above embodiments when the computer-readable instructions are run by the processor 82. For the specific implementation and related explanation content of each step of the method, reference may be made to the above embodiments, and the repeated parts will not be described here again.

For example, the processor 82 and the memory 81 may directly or indirectly communicate with each other. For example, the processor 82 and the memory 81 may communicate through a network. The network may include a wireless network, a wired network, and/or any combination of a wireless network and a wired network. The processor 82 and the memory 81 may also communicate with each other through a system bus, which is not limited in the present disclosure.

For example, the processor 82 may be embodied as various appropriate processors and processing apparatuses, such as a central processing unit (CPU), a graphics processing unit (GPU), a network processor (NP), etc.; or may also be a digital signal processor (DSP), an application specific integrated circuit (ASIC), a field programmable gate array (FPGA) or other programmable logic devices, a discrete gate or transistor logic device, and a discrete hardware component. The central processing unit (CPU) may be an X86 or ARM architecture or the like. For example, the memory 81 may include any combination of various forms of computer-readable storage media, such as a volatile memory and/or a non-volatile memory. The memory 81 may include, for example, a system memory that stores, for example, an operating system, an application, a boot loader, a database, and other programs. Various applications, various data, etc. may also be stored in the storage medium.

Additionally, according to some embodiments of the present disclosure, in a case where various operations/processes according to the present disclosure are implemented by software and/or firmware, a program constituting the software may be installed from a storage medium or a network to a computer system having a dedicated hardware structure, such as the computer system 90 shown in Fig. 9. When the computer system is installed with various programs, the computer system may perform various functions, including the functions as described above. Fig. 9 shows a schematic structural diagram of a computer system according to some embodiments of the present disclosure.

In Fig. 9, a central processing unit (CPU) 901 executes various processes according to a program stored in a read-only memory (ROM) 902 or a program loaded from a storage unit 908 into a random access memory (RAM) 903. The RAM 903 also stores data required when the CPU 901 executes various processes as needed. The central processing unit is merely exemplary, and it may also be other types of processors, such as the various processors as described above. The ROM 902, the RAM 903, and the storage unit 908 may be various forms of computer-readable storage media, as described below. It should be noted that although the ROM 902, the RAM 903, and the storage unit 908 are shown separately in Fig. 9, one or more of them may be combined or located in the same or different memories or storage modules.

The CPU 901, the ROM 902, and the RAM 903 are connected to each other via a bus 904. An input/output interface 905 is also connected to the bus 904.

The following components are connected to the input/output interface 905: an input unit 906, such as a touch screen, a touchpad, a keyboard, a mouse, an image sensor, a microphone, an accelerometer, and a gyroscope; an output unit 907, including a display, such as a cathode ray tube (CRT), a liquid crystal display (LCD), a speaker, and a vibrator; the storage unit 908, including a hard disk and a magnetic tape; and a communication unit 909, including a network interface card, such as a LAN card and a modem. The communication unit 909 allows communication processing to be executed via a network, such as the Internet. It is easily understood that although the apparatuses or modules in the computer system 90 are shown in Fig. 9 to communicate through the bus 904, they may also communicate through a network or other means, where the network may include a wireless network, a wired network, and/or any combination of a wireless network and a wired network.

According to needs, a driver 910 is also connected to the input/output interface 905. A removable medium 911, such as a magnetic disk, an optical disc, a magneto-optical disc, and a semiconductor memory, is installed on the driver 910 according to needs, so that a computer program read therefrom is installed in the storage unit 908 according to needs.

In the case where the above series of processes are implemented by software, a program constituting the software may be installed from a network, such as the Internet, or a storage medium, such as the removable medium 911.

According to the embodiments of the present disclosure, the process described above with reference to the flowchart may be implemented as a computer software program. For example, the embodiments of the present disclosure include a computer program product, which includes a computer program carried on a computer-readable medium, where the computer program contains program code for executing the method shown in the flowchart. In such an embodiment, the computer program may be downloaded and installed from a network through the communication unit 909, or installed from the storage unit 908, or installed from the ROM 902. When the computer program is executed by the CPU 901, the functions defined in the method of the embodiments of the present disclosure are executed.

It should be noted that in the context of the present disclosure, a computer-readable medium may be a tangible medium that may contain or store a program for use by or in combination with an instruction execution system, apparatus, or device. The computer-readable medium may be a computer-readable signal medium, a computer-readable storage medium, or any combination of the above two. The computer-readable storage medium may be, for example, but is not limited to, an electrical, magnetic, optical, electromagnetic, infrared, or semiconductor system, apparatus, or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus, or device. In the present disclosure, a computer-readable signal medium may include a data signal propagated in a baseband or as a part of a carrier wave, and computer-readable program code is carried therein. This propagated data signal may take many forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit a program for use by or in combination with an instruction execution system, apparatus, or device. The program code contained on the computer-readable medium may be transmitted by any suitable medium, including but not limited to: a wire, an optical cable, a radio frequency (RF), etc., or any suitable combination of the above.

The above computer-readable medium may be included in the above electronic device; or may exist alone without being assembled into the electronic device.

In some embodiments, there is further provided a computer program, including: instructions that, when executed by a processor, cause the processor to execute the interaction method of any one of the above embodiments. For example, the instructions may be embodied as computer program code.

In the embodiments of the present disclosure, the computer program code for performing the operations of the present disclosure may be written in one or more programming languages or a combination thereof, where the above programming languages include but are not limited to object-oriented programming languages, such as Java, Smalltalk, and C++, and further include conventional procedural programming languages, such as "C" language or similar programming languages. The program code may be executed entirely on a user's computer, partly on the user's computer, as a stand-alone software package, partly on the user's computer and partly on a remote computer, or entirely on the remote computer or server. In the case of involving a remote computer, the remote computer may be connected to the user's computer through any kind of network (including a local area network (LAN) or a wide area network (WAN)), or it may be connected to an external computer (for example, connected by using Internet provided by an Internet service provider).

The flowchart and block diagrams in the drawings illustrate the possibly implemented architectures, functions, and operations of the system, method, and computer program product according to various embodiments of the present disclosure. In this regard, each block in the flowchart or block diagrams may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagrams and/or the flowchart, and a combination of the blocks in the block diagrams and/or the flowchart may be implemented by a dedicated hardware-based system that executes specified functions or operations, or may be implemented by a combination of dedicated hardware and computer instructions.

The modules, components, or units involved in the embodiments of the present disclosure may be implemented by software or hardware. Among them, the name of the module, component, or unit does not constitute a limitation on the module, component, or unit itself under certain circumstances.

The functions described above herein may be at least partially performed by one or more hardware logic components. For example, without limitation, exemplary hardware logic components that may be used include: a field programmable gate array (FPGA), an application specific integrated circuit (ASIC), an application specific standard product (ASSP), a system on chip (SOC), a complex programmable logical device (CPLD), etc.

According to some embodiments of the present disclosure, a computer program is provided, including: instructions that, when executed by a processor, cause the processor to execute the interaction method of any one of the embodiments described in the present disclosure.

According to some embodiments of the present disclosure, a computer program product is provided, including instructions that, when executed by a processor, implement the interaction method of any one of the embodiments described in the present disclosure.

The above description is only some embodiments of the present disclosure and an explanation of the applied technical principles. Those skilled in the art should understand that the disclosed scope involved in the present disclosure is not limited to the technical solutions formed by the specific combination of the above technical features, and should also cover other technical solutions formed by the arbitrary combination of the above technical features or their equivalent features without departing from the above disclosed concept. For example, the above features and the technical features provided in the present disclosure (but not limited to) with similar functions may be replaced each other to form a technical solution.

In the description provided herein, many specific details are set forth. However, it should be understood that the embodiments of the present disclosure may be implemented without these specific details. In other cases, well-known methods, structures, and technologies are not shown in detail to avoid obscuring the understanding of the description.

Additionally, although operations are depicted in a particular order, it should not be understood that these operations are required to be performed in the particular order shown or in a sequential order. Under certain circumstances, multitasking and parallel processing may be advantageous. Similarly, although several specific implementation details are included in the above discussion, these should not be interpreted as limiting the scope of the present disclosure. Certain features described in the context of separate embodiments may also be implemented in a single embodiment in combination. Conversely, various features described in the context of a single embodiment may also be implemented in a plurality of embodiments individually or in any suitable subcombination.

Although some specific embodiments of the present disclosure have been described in detail by way of examples, those skilled in the art should understand that the above examples are only for illustration, and are not intended to limit the scope of the present disclosure. Those skilled in the art should understand that the above embodiments may be modified without departing from the scope and spirit of the present disclosure. The scope of the present disclosure is defined by the appended claims.

## Claims

1. An interaction method, comprising:
displaying, in response to triggering display of a first media interface, a message preview window in the first media interface, the message preview window comprising a preview of at least one unread message, and the first media interface being configured for displaying multimedia content;
displaying a message entry control in the first media interface; and
displaying a message page in response to a specified operation on the message entry control.

2. The interaction method of claim 1, further comprising:
displaying the message page in response to a specified operation on the message preview window.

3. The interaction method of claim 2, wherein the specified operation is a pull-down operation, and displaying the message page in response to the specified operation on the message preview window comprises:
displaying the message page in response to the pull-down operation on an edge of the message preview window.

4. The interaction method of claim 3, wherein displaying the message page in response to the pull-down operation on the edge of the message preview window comprises:
displaying an animation of expanding the message preview window in response to the pull-down operation on the edge of the message preview window; and
displaying the message page in response to the end of the animation.

5. The interaction method of any of claims 2 to 4, wherein displaying the message preview window in the first media interface comprises:
displaying the message preview window above the multimedia content in the first media interface, the media content being partially displayed.

6. The interaction method of claim 5, wherein displaying the message page in response to the specified operation on the message preview window comprises:
gradually expanding a display area of the message preview window while gradually moving the media content out of the first media interface in response to the pull-down operation on the edge of the message preview window; and
displaying the message page in response to the media content being completely moved out of the first media interface.

7. The interaction method of any of claims 2 to 6, wherein the message preview window comprises a specified number of preview entries, and in response to a number of preview entries corresponding to unread messages being less than the specified number, the message preview window further comprises a preview entry corresponding to a read message.

8. The interaction method of any of claims 1 to 7, further comprising:
displaying the message page in response to a slide operation in an edge area corresponding to the message entry control in the first media interface.

9. The interaction method of claim 8, wherein the edge area corresponding to the message entry control is an edge area closer to the message entry control in two side edge areas of the first media interface.

10. The interaction method of any of claims 1 to 9, further comprising:
displaying the message entry control in a second media interface for displaying multimedia content, a position of the message entry control in the second media interface being the same as a position of the message entry control in the first media interface.

11. An interaction apparatus, comprising:
a first display module configured to, display, in response to triggering display of a first media interface, a message preview window in the first media interface, the message preview window comprising a preview of at least one unread message, and the first media interface being for displaying multimedia content;
a second display module configured to display a message entry control in the first media interface; and
a third display module configured to display a message page in response to a specified operation on the message entry control.

12. An interaction apparatus, comprising:
a memory; and
a processor coupled to the memory, the processor being configured to, based on instructions stored in the memory, execute the interaction method of any of claims 1 to 10.

13. A computer-readable storage medium having a computer program stored thereon, wherein when the program is executed by a processor, the interaction method of any of claims 1 to 10 is implemented.

14. A computer program, comprising:
instructions that, when executed by a processor, cause the processor to execute the interaction method of any of claims 1 to 10.
